# EUROPÄISCHE PATENTANMELDUNG

(11) **EP 2 450 092 A1**
(43) Veröffentlichungstag der Anmeldung: **09.05.2012**
(21) Anmeldenummer: 10014315.5
(22) Anmeldetag: 05.11.2010
(51) Int. Cl.: B01D 29/11

(54) **Filterstapel für eine Filterpumpe**

(71) Anmelder: Grundfos Management A/S, 8850 Bjerringbro (DK)
(72) Erfinder: Mangaard, Thomas, 8643 Ans (DK); Vad, Martin, 8960 Randers Sø (DK); Rasmussen, Christian, 8830 Tjele (DK); Roddik, Michael, Lovskal 8850 Bjerringbro (DK)
(74) Vertreter: Hemmer, Arnd

(57) **Zusammenfassung**

Ein Filterstapel für eine Filterpumpe weist mindestens zwei axial voneinander beabstandeten Filterplatten (2) auf. Diese Filterplatten (2) sind mit mindestens einer Durchbrechung (6) zur Aufnahme eines Filtratabzugsrohrs (8) ausgestattet. Der Filterstapel ist als eine Montageeinheit ausgebildet ist, bei der die Filterplatten (2) und das Filtratabzugsrohr (8) fest miteinander verbunden sind. (Fig. 1)

## Beschreibung

Die Erfindung betrifft einen Filterstapel für eine Filterpumpe.

Filterstapel dieser Art werden in Filterpumpen eingesetzt, um in einer von diesen Filterpumpen zu fördernden Flüssigkeit enthaltene Verunreinigungen von der Flüssigkeit zu trennen. Die Filterstapel bestehen aus mehreren beabstandet übereinander angeordneten Filterplatten, die in einem Filtergehäuse der Filterpumpe eingesetzt sind.

Eine solche Filterpumpe ist aus EP 2 002 874 A1 bekannt. Bei dieser Filterpumpe werden die einzelnen Filterplatten in Stapelrichtung von mehreren Filtratabzugsrohren durchsetzt. Zwischen benachbarten Filterplatten sind jeweils Distanzelemente angeordnet, die die Filtratabzugsrohre umgeben. Die Distanzelemente dienen dazu, die Filterplatten in einem vorbestimmten Abstand zueinander zu halten. Zentral weisen die einzelnen Filterplatten eine Durchbrechung auf. In dem so innerhalb des Filterstapels gebildeten freien Raum ist ein Gehäuse zur Aufnahme einer Kreiselpumpe angeordnet.

Zum Einbau des Filterstapels in der Filterpumpe werden die Filterplatten nacheinander einzeln in dem als offener Topf ausgebildeten Filtergehäuse lose übereinander gestapelt, was mit einem großen Arbeitsaufwand verbunden ist. Anschließend wird der Filterstapel mit einem auf dem Filtergehäuse aufgesetzten Deckel zusammengehalten. Hierbei kann der von dem Deckel auf den Filterstapel ausgeübte Druck dazu führen, dass einzelne oder mehrere Filterplatten, die aus sprödem Keramikmaterial bestehen, beschädigt oder sogar zerstört werden. Ein weiterer Nachteil der aus EP 2 002 874 A1 bekannten Filterpumpe besteht darin, dass die Übergänge von den einzelnen Filterplatten zu den Filtratabzugsrohren bzw. zu den um den Filtratabzugsrohren angeordneten Distanzelementen und die Übergänge zu dem Gehäuse für die Kreiselpumpe abgedichtet werden müssen, wobei ein Verschleiß der hierzu verwendeten Dichtungen oder eine Verschiebung dieser Dichtungen beim Einbau der Filterplatten in das Filtergehäuse zu einem Fehlverhalten oder sogar zu einem Ausfall der Filterpumpe führen kann. Die einzelnen Dichtungen sind jeweils als Axialdichtungen ausgebildet, was es auch erforderlich macht, den Filterstapel in Stapelrichtung mit Druck zu beaufschlagen, um die erforderliche Dichtwirkung zu erzielen. Des Weiteren erweist es sich insbesondere bei Filterstapeln mit vergleichsweise vielen übereinander gestapelten Filterplatten als problematisch, das Maßungenauigkeiten hinsichtlich der Dicke der einzelnen Filterplatten dazu führen können, dass die Baugröße des Filterstapels von dem gewünschten Maß erheblich abweichen kann, was den Einbau des Filterstapels in dem Filtergehäuse erschwert und ungünstigstenfalls unmöglich macht.

Vor diesem Hintergrund liegt der Erfindung die Aufgabe zugrunde, einen Filterstapel für eine Filterpumpe zu schaffen, der bei einem einfachen Aufbau eine verringerte Defektanfälligkeit aufweist und einfacher in eine Filterpumpe eingebaut werden kann.

Gelöst wird diese Aufgabe durch einen Filterstapel mit den in Anspruch 1 angegebenen Merkmalen. Vorteilhafte Weiterbildungen dieses Filterstapels ergeben sich aus den Unteransprüchen, der nachfolgenden Beschreibung sowie den Zeichnungen. Hierbei können gemäß der Erfindung die in den Unteransprüchen angegebenen Merkmale jeweils für sich, aber auch in technologisch sinnvoller Kombination die erfindungsgemäße Lösung gemäß Anspruch 1 weiter ausgestalten.

Der erfindungsgemäße Filterstapel für eine Filterpumpe weist mindestens zwei, in der Regel aber mehr als zwei axial voneinander beabstandete sich vorzugsweise im Wesentlichen parallel zueinander erstreckende Filterplatten auf. In üblicher Weise sind die Filterplatten übereinander angeordnet. Jede der Filterplatten ist mit mindestens einer Durchbrechung zur Aufnahme eines Filtratabzugsrohres ausgestattet. Typischerweise sind die Filterplatten hierzu so ausgerichtet, dass die Durchbrechungen in Stapelrichtung der Filterplatten miteinander fluchten, d. h. dass die Durchbrechungen bei montiertem Filterstapel eine gemeinsame Mittelachse aufweisen. Vorteilhafterweise werden mehrere Filtratabzugsrohre durch den erfindungsgemäßen Filterstapel geführt, sodass die Filterplatten jeweils mehrere Durchbrechungen zur Aufnahme dieser Filtratabzugsrohre aufweisen. Die Durchbrechungen zur Aufnahme der Filtratabzugsrohre können grundsätzlich an beliebiger Stelle der Filterplatten ausgebildet sein, bevorzugt sind sie allerdings in einem Außenrandbereich der Filterplatten ausgebildet.

Die Grundidee der Erfindung ist es, dass der Filterstapel als eine Montageeinheit ausgebildet ist, bei der die Filterplatten und das zumindest eine Filtratabzugsrohr fest miteinander verbunden sind. D. h., der Filterstapel wird vollständig außerhalb der Filterpumpe hergestellt und zum Einbau in die Filterpumpe als Ganzes in deren Filtergehäuse eingesetzt. Insofern ist der Einbau des Filterstapels in die Filterpumpe gegenüber den bislang verwendeten Filterstapeln deutlich vereinfacht. Dies gilt typischerweise auch für den Ausbau des Filterstapels aus der Filterpumpe beispielsweise bei einem Fehlverhalten der Filtervorrichtung oder zu Wartungszwecken der Filtervorrichtung. In diesem Fall kann der Filterstapel ebenfalls als Ganzes aus der Filterpumpe entnommen werden und außerhalb der Filterpumpe untersucht und/oder repariert werden oder besonders bequem gegebenenfalls durch einen anderen vormontierten Filterstapel ersetzt werden. Ein weiterer Vorteil des erfindungsgemäßen Filterstapels besteht darin, dass eine Montage des Filterstapels möglich ist, bei der die Filterplatten des Filterstapels anders als beim Stand der Technik keiner Druckbeanspruchung ausgesetzt sind.

Bevorzugt weisen die Filterplatten des erfindungsgemäßen Filterstapels jeweils mindestens eine Durchbrechung zur Aufnahme einer Umwälzvorrichtung auf. Diese Durchbrechungen erstrecken sich durch die Filterplatten zweckmäßigerweise in axialer Richtung senkrecht zu deren Flachseiten, wobei die Durchbrechungen an den Filterplatten derart angeordnet sind, dass sie bei übereinander gestapelten Filterplatten direkt übereinander angeordnet sind, also miteinander fluchten und eine gemeinsame Mittelachse aufweisen. Auf diese Weise wird in dem Filterstapel ein sich in Längsrichtung bzw. Axialrichtung des Filterstapels bzw. in Stapelrichtung der Filterplatten erstreckender Freiraum geschaffen, in dem die Umwälzvorrichtung direkt oder vorzugsweise indirekt in einem darin angeordneten Gehäuse angeordnet ist. Vorzugsweise ist vorgesehen, dass die Durchbrechungen zentral und konzentrisch zu den Filterplatten ausgebildet sind. Alternativ ist es natürlich auch möglich, die Durchbrechungen an den einzelnen Filterplatten an beliebiger Stelle dezentral auszubilden. Bei der Umwälzvorrichtung kann es sich um eine Kreiselpumpe und bevorzugt um eine mehrstufige Kreiselpumpe handeln, deren Laufräder zweckmäßigerweise so angeordnet sind, dass sie die von der Filterpumpe geförderte Flüssigkeit in den Filterstapel in die Zwischenräume zwischen benachbarten Filterplatten abführen.

Vorteilhaft können die Filterplatten und das Filtratabzugsrohr miteinander verklebt sein. Auf diese Weise wird eine stoffschlüssige Verbindung zwischen den Filterplatten und dem Filtratabzugsrohr geschaffen. Die Verklebung der Filterplatten mit dem Filtratabzugsrohr ist zweckmäßigerweise derart gestaltet, dass die Klebenähte die Übergänge von den Filterplatten zu dem Filtratabzugsrohr flüssigkeitsdicht verschließen, sodass hierfür keine zusätzlichen Dichtmittel erforderlich sind. Demzufolge verlaufen die Klebenähte bevorzugt um den gesamten Umfang der Filtratabzugsrohre. Zum Verkleben der Filterplatten mit dem Filtratabzugsrohr können grundsätzlich alle hierfür geeigneten Klebemittel, beispielsweise Epoxidharzklebstoffe eingesetzt werden.

Alternativ zu einer Klebverbindung der Filterplatten mit dem Filtratabzugsrohr kann es auch vorteilhaft sein, die Filterplatten und das Filtratabzugsrohr miteinander durch Sintern zu verbinden. In diesem Fall sind die Filterplatten und das Filtratabzugsrohr geeigneterweise beide aus einem Polymermaterial, Keramikmaterial oder einem metallischen Material ausgebildet. Bevorzugt werden die Filterplatten und das Filtratabzugsrohr von ungesinterten polymeren, keramischen oder metallischen Formkörpern, so genannten Grünkörpern, gebildet, die zu einem Filterstapel zusammengesetzt und anschließend gemeinsam gesintert werden. Danach kann der Filterstapel vorteilhafterweise noch mit einer Beschichtung versehen werden, die eine flüssigkeitsdurchlässige, dabei aber feststoffundurchlässige Membran bildet. Vorteilhafterweise entstehen auch bei einer Sinterverbindung von Filterplatten und Filtratabzugsrohr zwischen diesen keine offenen Übergänge, die mit Dichtungen abzudichten sind.

Solche Dichtungen sind auch dann nicht erforderlich, wenn der Filterstapel, wie es eine weitere vorteilhafte Ausgestaltung vorsieht, als ein einteiliges Bauteil ausgebildet ist. In diesem Zusammenhang ist vorgesehen, den Filterstapel mit einem "rapid manufacturing"-Verfahren, beispielsweise durch 3D-Printing, selektives Laserschmelzen, selektives Lasersintern oder ähnliche Verfahren herzustellen. Mit diesen Herstellungsverfahren lässt sich der Filterstapel mit sehr großer Maßgenauigkeit einteilig fertigen.

Bei einer mehrteiligen Ausgestaltung des Filterstapels besteht auch die Möglichkeit, die Einzelteile des Filterstapels mechanisch, beispielsweise mittels Schraub- und/oder Rastverbindungen miteinander zu verbinden. Das Filtratabzugsrohr kann neben einer einteiligen Ausbildung, bei der es durch die hierfür an den Filterplatten vorgesehenen Durchbrechungen geführt ist und an den Filterplatten befestigt ist, vorteilhaft auch mehrteilig ausgebildet sein. Dementsprechend kann das Filtratabzugsrohr modular aus mehreren Rohrabschnitten aufgebaut sein, die in Flucht zueinander angeordnet das Filterabzugsrohr bilden.

In vorteilhafter Weiterbildung dieser Ausgestaltung können bei dem erfindungsgemäßen Filterstapel benachbarte Filterplatten mittels in die Durchbrechung zur Aufnahme des Filtratabzugsrohrs eingreifender Distanzelemente beabstandet sein, wobei die Distanzelemente das Filterabzugsrohr bilden. D. h., dass die Distanzstücke rohrförmig hohl ausgebildet sind und jeweils einen Abschnitt des Filtratabzugsrohrs bilden, gleichzeitig aber auch, beispielsweise durch eine an den Distanzstücken ausgebildete Auflagefläche, den Abstand zwischen benachbarten Filterplatten festlegen. Die Distanzelemente sind bevorzugt so dimensioniert, dass die Filterplatten jeweils gleich voneinander beabstandet sind.

Anders als beim Stand der Technik, bei dem sich die Distanzelemente jeweils auf den Filterplatten abstützen, stützen sich axial benachbarte Distanzelemente bei dem erfindungsgemäßen Filterstapel bevorzugt direkt aufeinander ab. Demzufolge sind die Distanzelemente vorzugsweise jeweils direkt aufeinander aufliegend angeordnet. Diese Maßnahme gewährleistet, dass das Filtratabzugsrohr und damit einhergehend der Filterstapel in Längsrichtung immer maßgleich ausgebildet sind und sich kleinere Maßungenauigkeiten der einzelnen Filterplatten nicht auf die Höhe des Filtratstapels auswirken.

Besonders vorteilhaft stützen sich benachbarte Distanzelemente im Bereich der Durchbrechung bzw. Durchbrechungen der Filterplatte ab, die zur Aufnahme der Filtratabzugsrohre dienen. Insofern ist es nur erforderlich, die an eine Filterplatte angrenzenden Distanzelemente gegenüber der Filterplatte abzudichten, ohne dass eine zusätzliche Abdichtung des Kontaktbereichs der aneinander anliegenden Distanzelemente erforderlich ist.

Zweckmäßigerweise weisen die Distanzelemente einen Außendurchmesser auf, der kleiner als der Durchmesser der Durchbrechungen zur Aufnahme des Filtratabzugsrohrs ist. An dem Außenumfang der Distanzelemente kann vorteilhaft eine radial nach außen auskragende ringförmige Anlageschulter ausgebildet sein, die eine Auflagefläche für eine Filterplatte bildet. Die Anlageschulter ist zweckmäßigerweise derart angeordnet, dass sie das Distanzelement in axialer Richtung in zwei voneinander abgewandte Distanzelementabschnitte teilt. Die beiden Distanzelementabschnitte weisen vorzugsweise eine solche Länge auf, dass das Gesamtmaß eines ersten Distanzelementabschnitts eines ersten Distanzelements und eines zweiten Distanzelementabschnitts eines zweiten Distanzelements, welcher sich an dem ersten Distanzelementabschnitt des ersten Distanzelements abstützt, zumindest gleich groß wie oder größer als die Dicke der Filterplatte ist, d.h., das Maß der addierten Längen von erstem und zweitem Distanzelement entspricht zumindest der Breite der Filterplatte oder ist sogar größer.

Bei einer Ausgestaltung, bei der sich benachbarte Distanzelemente im Bereich der Filterplatten in den dort ausgebildeten Durchbrechungen abstützen, ist bevorzugt vorgesehen, dass an einer Stirnseite der Distanzelemente jeweils mindestens ein axial hervorstehender Höcker ausgebildet ist. Vorzugsweise sind an einer ersten Stirnseite der Distanzstücke zumindest jeweils drei in axialer Richtung auskragende Höcker vorgesehen, welche an der entgegengesetzten zweiten Stirnseite eines angrenzenden Distanzelements zur Anlage kommen. Indem drei Höcker vorgesehen sind, bilden diese eine Dreipunktlagerung, wodurch die Distanzelemente stabil aufeinander gelagert werden. Die Höcker sind an der einen Stirnseite der Distanzelemente über den Umfang verteilt beabstandet voneinander angeordnet. Im zusammengebauten Zustand des Filterstapels sind sie jeweils innerhalb der Durchbrechung zur Aufnahme des Filtratabzugsrohrs einer Filterplatte angeordnet. Hier wird das Filtrat von der jeweiligen Filterplatte in das Filtratabzugsrohr geleitet, wobei die zwischen den Höckern ausgebildeten freien Zwischenräume einen ungehinderten Filtratfluss von der Filtratplatte in das Filtratabzugsrohr ermöglichen.

Zweckmäßigerweise können benachbarte Filterplatten mittels einer um das Distanzelement umlaufenden Klebenaht miteinander verbunden sein. In diesem Fall ist zwischen benachbarten Filterplatten eine um das zwischen diesen Filterplatten angeordnete Distanzelement verlaufende geschlossene Klebenaht vorgesehen, die den Zwischenraum zwischen den beiden Filterplatten vollständig verschließt. Mit diesen Klebenähten zwischen benachbarten Filterplatten wird nicht nur der Zusammenhalt des Filterstapels hergestellt, sondern auch das von den Distanzelementen gebildete Filtratabzugsrohr gegenüber den Filterplatten flüssigkeitsdicht abgedichtet. Insofern sind bei dieser Ausgestaltung keine weiteren Dichtmittel zur Abdichtung der Übergänge von den Filterplatten zu den Distanzelementen bzw. zu dem Filtratabzugsrohr erforderlich.

In einer weiteren vorteilhaften Ausgestaltung des erfindungsgemäßen Filterstapels ist vorgesehen, dass die Distanzelemente Rastmittel aufweisen, mit denen benachbarte Distanzelemente miteinander verbindbar sind. Zum Beispiel können an den Distanzelementen elastisch nachgebende Rastelemente ausgebildet sein, die in korrespondierende Rastelemente des benachbarten Distanzelements eingreifen und auf diese Weise die beiden Distanzelemente formschlüssig miteinander verbinden, wobei bevorzugt vorgesehen ist, dass die beiden Distanzelemente hierbei eine Filterplatte in einer definierten Position festlegen.

Bei einer mechanischen Verbindung der Distanzelemente miteinander sind diese Distanzelemente zweckmäßigerweise gegenüber den Filterplatten abzudichten. Dem wird in vorteilhafter Weise eine Ausgestaltung gerecht, bei der Dichtringe vorgesehen sind, die jeweils ein Distanzelement umgeben und mit jeweils zwei benachbarten Filterplatten in dichtender Anlage sind. So kann z. B. um die Distanzelemente jeweils ein Dichtring angeordnet sein, der diese Distanzelemente gleichzeitig zu beiden daran angrenzenden Filterplatten abdichtet, oder es können um jedes der Distanzelemente zwei Dichtringe angeordnet sein, wobei jeder der beiden Dichtringe den Übergang von einer der beiden Filterplatten zu dem Distanzelement abdichtet. Bei den Dichtringen kann es sich um einfache O-Ringe handeln. Bevorzugt werden allerdings Profildichtringe wie z.B. Lippendichtringe oder X-Ringe eingesetzt, die in axialer Richtung eine vergleichsweise große Flexibilität aufweisen, wodurch sichergestellt werden kann, dass die axiale Bauhöhe des Filterstapels trotz gewisser Maßungenauigkeiten hinsichtlich der Dicke der Filterplatten immer genau das geforderte Maß aufweist.

Zweckmäßigerweise greift bei dem erfindungsgemäßen Filterstapel in die Durchbrechung zur Aufnahme des Filtratabzugsrohrs zumindest einer eine Stirnseite des Filterstapels bildenden Filterplatte ein Verbindungselement ein, das zur Bildung einer Verbindung zu einer Filtratleitung der Filterpumpe oder zu einem weiteren Filterstapel ausgebildet ist. Das Verbindungselement greift dementsprechend in die an der abflussseitig äußeren Filterplatte ausgebildete Durchbrechung ein und schafft eine Strömungsverbindung von dem Filtratabzugsrohr in dem Filterstapel zu einer Filtratleitung der Filterpumpe über die das Filtrat aus der Filterpumpe abgeführt wird oder schafft eine Strömungsverbindung zu dem Filtratabzugsrohr eines zusätzlichen Filterstapels, der mit dem ersten Filterstapel in Reihe leitungsverbunden ist. Sind mehrere Filterstapel hintereinander in Reihe angeordnet, greift bevorzugt an beiden äußeren Filterplatten des Filterstapels in die Durchbrechungen zur Aufnahme des Filtratabzugsrohrs jeweils ein Verbindungselement ein, um jeweils eine Strömungsverbindung zu dem Filtratabzugsrohr des jeweils benachbarten Filterstapels zu schaffen. Falls das Filtratabzugsrohr einteilig ausgebildet ist, ist auch eine solche Ausgestaltung denkbar, bei der zumindest ein Ende des Filtratabzugsrohrs an der äußeren Stirnseite einer äußeren Filterplatte herausragt, wobei an diesem Ende des Filtratabzugsrohrs Mittel zum Verbinden des Filtratabzugsrohrs mit eine Filtratleitung oder einem Filtratabzugsrohr eines weiteren Filterstapels vorgesehen sein können. Zweckmäßigerweise werden auch die Verbindungselemente gegenüber der daran direkt angrenzenden Filterplatte mittels Dichtringen und vorzugsweise mittels Profildichtringen abgedichtet.

Vorteilhafterweise kann zwischen den benachbarten Filterplatten jeweils zumindest ein Auflageelement angeordnet sein. Die Verwendung von Auflageelementen ist insbesondere dann sinnvoll, wenn der Filterstapel keine sonstigen Abstützmöglichkeiten für die einzelnen Filterplatten innerhalb des Filterstapels bietet. Die Auflageelemente können jeweils auf einer Flachseite einer Filterplatte angeordnet sein und dienen als Auflager für die nächstfolgend benachbarte Filterplatte des Filterstapels. Die Abmessungen der Auflageelemente in Stapelrichtung des Filterstapels entsprechend typischerweise dem geforderten Abstand zwischen zwei benachbarten Filterplatten. Bevorzugt sind zwischen zwei benachbarten Filterplatten zumindest drei Auflageelemente angeordnet, um eine stabile Lagerung einer Filterplatte auf einer benachbarten Filterplatte zu ermöglichen.

Zweckdienlich können die Filterplatten, bei denen es sich bevorzugt um Sinterteile handelt, einen porösen Kern aufweisen, der von einer Membran umgeben ist. Hierbei ist unter einem porösen Kern ein Kern zu verstehen, der aus einem Material mit einer offenen Porosität ausgebildet ist und somit von einer Flüssigkeit durchdrungen werden kann. Über die in dem Kernmaterial ausgebildeten freien Zwischenräume kann die zu filternde Flüssigkeit in der Umgebung des Filterstapels in die Filterplatten eindringen. Von dort wird das Filtrat zu den Durchbrechungen zur Aufnahme der Filtratabzugsrohre geleitet, wo es in die Filtratabzugsleitungen abströmen kann und aus der Filterpumpe abgeführt wird.

Bevorzugt wird dieser Vorgang dadurch unterstützt, dass innerhalb des Kerns der Filterplatten zusätzlich freie Kanäle ausgebildet sind, die in Strömungsverbindung mit den Durchbrechungen zur Aufnahme der Filtratabzugsrohre stehen. Diese Kanäle können sich zum Beispiel innerhalb der Filterplatten radial erstrecken und die Durchbrechungen zur Aufnahme der Filtratabzugsrohre kreuzen. Darüber hinaus können diese Kanäle mit weiteren Kanälen strömungsverbunden sein, die sich beispielsweise konzentrisch zum Umfang der Filterplatten erstrecken.

Als Material für den Kern der Filterplatten kann zum Beispiel ein Polymermaterial, Siliciumcarbid, Aluminiumoxid oder nicht rostender Stahl verwendet werden. Die den Kern umgebende Membran ist flüssigkeitsdurchlässig, dabei aber so ausgebildet, dass Verunreinigungen der zu filternden Flüssigkeit davon abgehalten werden, in den Kern der Filterplatte einzudringen. Die Membran kann beispielsweise aus einem Polymermaterial ausgebildet sein, dass zum Beispiel mittels Tauch-, Schleuder- oder Spritzbeschichten sowie Foliengießen auf den Kern aufgetragen und mit einer Perforation versehen wird.

Bei einer Ausgestaltung, bei der das zumindest eine Filtratabzugsrohr und die Filterplatten mechanisch miteinander verbunden sind, kann vorteilhaft mindestens ein Sicherungsring vorgesehen sein, der die Filterplatten auf dem Filtratabzugsrohr festlegt. So ist es z.B. möglich jede Filterplatte an dem Filtratabzugsrohr einzeln mittels Sicherungsringen festzulegen, die in an dem Filtratabzugsrohr umfangsseitig ausgebildete Ringnuten eingreifen. Vorzugsweise ist aber vorgesehen, dass sich benachbarte Filterplatten lose auf dazwischen angeordneten Abstandselementen abstützen, wobei lediglich die äußeren Filterplatten mittels außenseitig davon angeordneten Sicherungsringen gehalten werden.

Nachfolgend ist die Erfindung anhand von in den Zeichnungen dargestellen Ausführungsbeispielen näher erläutert. In den Zeichnungen zeigt:
- Fig. 1: einen Filterstapel in einer Seitenansicht,
- Fig. 2: den Filterstapel nach Fig. 1 in einer Draufsicht,
- Fig. 3: den Filterstapel nach Fig. 1 in einem Längsschnitt,
- Fig. 4: vergrößert eine Einzelheit A aus Fig. 3,
- Fig. 5: in vereinfachter geschnittener Explosionsdarstellung den Filterstapel nach Fig. 1,
- Fig. 6: einen Teilbereich der Fig. 5 mit Darstellung verwendeter Dichtringe,
- Fig. 7: den in Einzelheit A von Fig. 3 dargestellten Bereich in einer weiteren Ausführungsform,
- Fig. 8: einen geschnitten dargestellten Teilbereich um ein Filtratabzugsrohr eines Filterstapels in einer weiteren Ausgestaltung,
- Fig. 9: den Teichbereich des Filterstapels nach Fig. 8 in einer Explosionsdarstellung, und
- Fig. 10: in einer Explosionsdarstellung einen geschnitten dargestellten Teilbereich um ein Filtratabzugsrohr eines Filterstapels in einer weiteren Ausgestaltung.

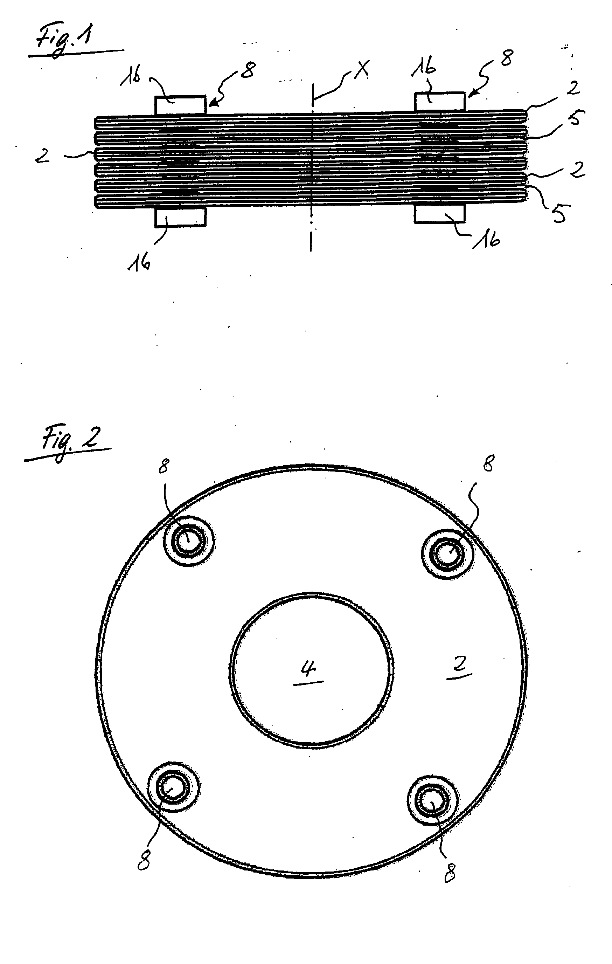

Der in Fig. 1 dargestellte Filterstapel für eine Filterpumpe weist sechs flach übereinander angeordnete, sich parallel zueinander erstreckende, kreisförmige Filterplatten 2 auf, die voneinander axial, d.h. in Richtung einer Längsachse X der Filterplatten 2 bzw. des Filterstapels, beabstandet sind. Die Filterplatten 2 weisen einen porösen Kern auf, der von einer flüssigkeitsdurchlässigen und feststoffundurchlässigen Membran umgeben ist. Axial mittig ist an den Filterplatten 2 jeweils eine kreisförmige Durchbrechung 4 ausgebildet. Innerhalb des Filterstapels bilden die Durchbrechungen 4 der sechs Filterplatten 2 einen freien Raum, der zur Aufnahme einer Umwälzvorrichtung dient, mit der eine zu filternde Flüssigkeit in den Filterstapel gefördert wird. Von der Umwälzvorrichtung wird die zu filtrierende Flüssigkeit in die Zwischenräume 5 zwischen jeweils benachbarten Filterplatten 2 gefördert.

Neben der Durchbrechung 4 sind an einem radialen äußeren Randbereich der Filterplatten 2 vier Durchbrechungen 6 ausgebildet. Die Durchbrechungen 6 sind jeweils in Winkelabschnitten von 90° voneinander beabstandet. Innerhalb des Filterstapels bilden übereinander angeordnete Durchbrechungen 6 einen freien Raum, der zur Aufnahme eines Filtratabzugsrohrs 8 dient. Insofern weist der Filterstapel vier Filtratabzugsrohre 8 auf. Diese dienen dazu, die in den Filterplatten 2 filtrierte Flüssigkeit aus dem Filterstapel abzuführen. Bei den in den Zeichnungen dargestellten Filterstapeln sind die Filterplatten 2 und die Filtratabzugsrohre 8 fest miteinander verbunden, so dass die Filterstapel jeweils als eine Montageeinheit ausgebildet sind. Hierauf wird nachfolgend noch ausführlicher eingegangen.

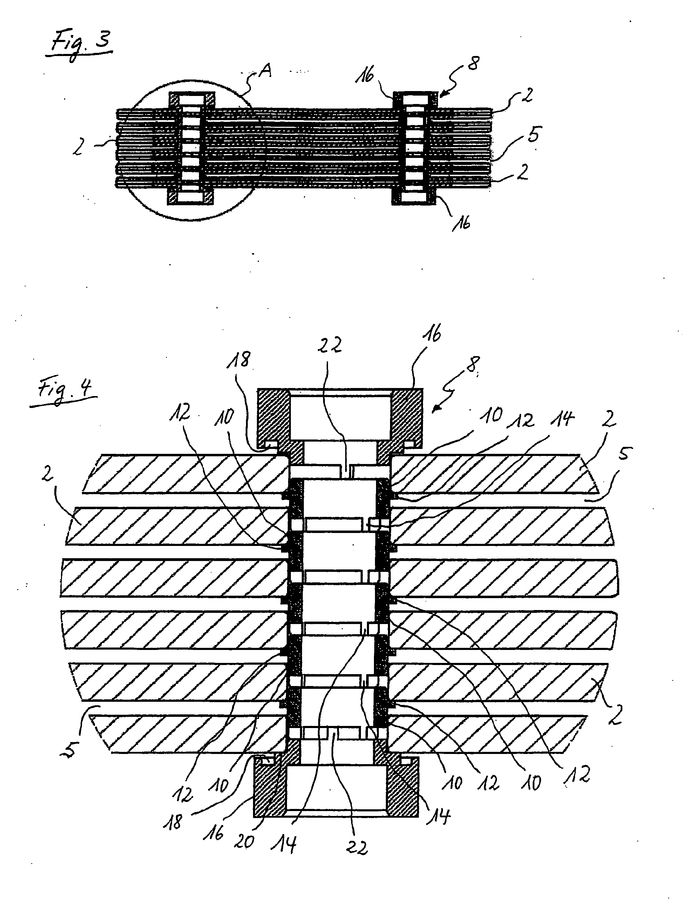

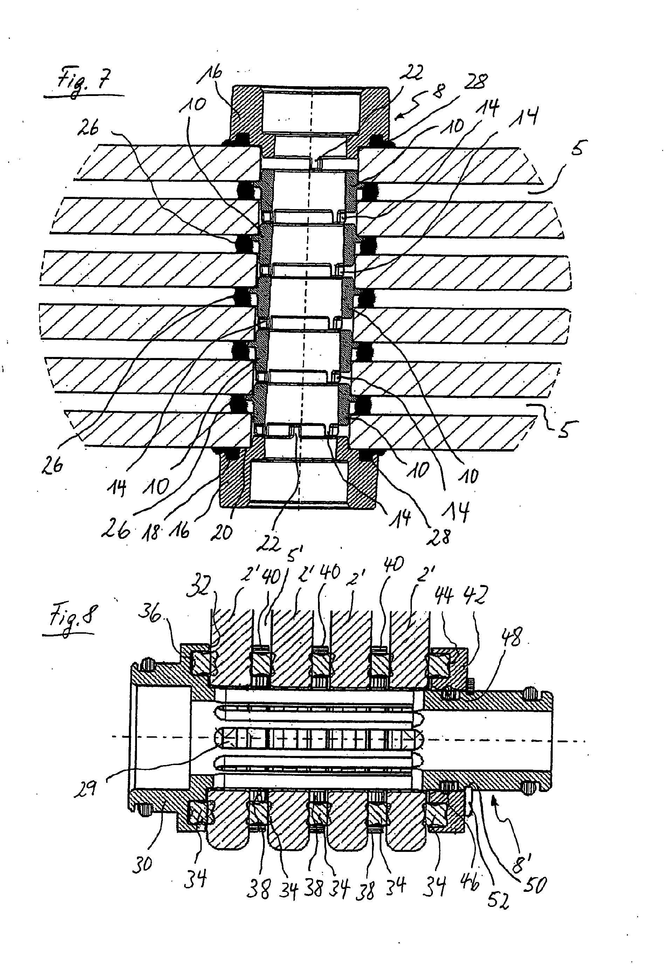

Bei den in den Fig. 1 bis 7 dargestellten Ausgestaltungen des Filterstapels, ist das Filtratabzugsrohr 8 nicht einteilig sondern mehrteilig ausgebildet. Wie den Fig. 4 und 7 zu entnehmen ist, werden die Filtratabzugsrohre 8 von fünf rohrförmigen Distanzelementen 10 gebildet, die sich in axialer Richtung aufeinander abstützen. Jedes der Distanzelemente 10 greift in die Durchbrechungen 6 benachbarter Filterplatten 2 ein. An den Distanzelementen 10 ist jeweils an deren Außenumfang ein ringförmiger Kragen 12 ausgebildet. Jeder Kragen 12 dient als Auflagefläche für eine Filterplatte 2, auf der sich die Filterplatte 2 derart abstützt, dass sie von einer direkt benachbarten Filterplatte 2 über den Zwischenraum 5 beabstandet ist. An einer Stirnseite der Distanzelemente sind jeweils drei axial vorstehende Höcker 14 ausgebildet. Mittels dieser Höcker 14 stützen sich die Distanzelemente 10 jeweils im Bereich bzw. im Inneren einer Durchbrechung 6 einer Filterplatte 2 ab. Die Höcker 14 sind voneinander beabstandet über den Umfang der Distanzelemente 10 verteilt angeordnet. Die so zwischen den Höckern 14 ausgebildeten freien Zwischenräume dienen als Strömungszugang für das Filtrat aus den Filterplatten 2 in das Filtratabzugsrohr 8.

An den Durchbrechungen 6 der beiden äußeren Filterplatten 2 des Filterstapels greift jeweils ein Verbindungselement 16 ein. Die Verbindungselemente 16 bilden auch einen Teil des Filtratabzugsrohrs 8. Sie dienen dazu, eine Verbindung der Filtratabzugsrohre 8 mit Filtratleitungen der Filterpumpe oder mit Filtratabzugsrohren eines nachgeschalteten Filterstapels herzustellen.

Die Verbindungselemente 16 verjüngen sich ausgehend von einem Teil, der außenseitig einer äußeren Filterplatte 2 angeordnet ist, absatzförmig. So ist an den Verbindungselementen 16 ein erster Absatz ausgebildet, an dem eine Ringnut 18 ausgebildet ist. Hieran schließt sich ein zweiter Absatz an, der eine ringförmige Auflagefläche 20 für eine äußere Filterplatte 2 bildet. Schließlich weisen die Verbindungselemente 16 einen dritten Absatz auf, der in die Durchbrechung 6 der äußeren Filterplatte 2 eingreift. An der Stirnseite dieses dritten Absatzes der Verbindungselemente 16 sind in axialer Richtung vorstehende Höcker 22 ausgebildet, auf denen sich ein Distanzelement 10 abstützt, bzw. mit dem sich das Verbindungselement 16 auf einem Distanzelement 10 abstützt.

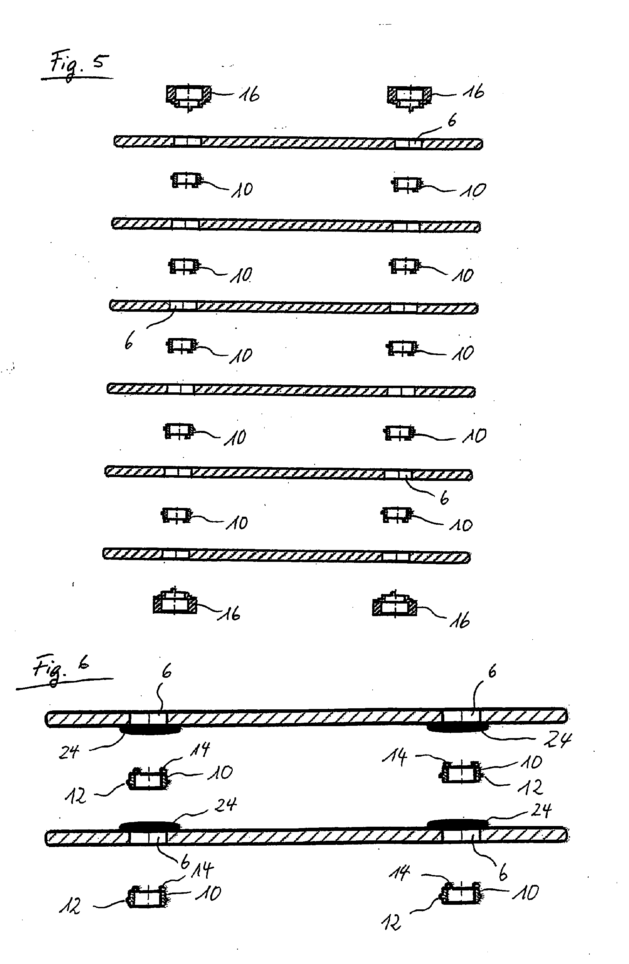

Im Bereich der Zwischenräume 5 wird das Filtratabzugsrohr 8 bzw. die Distanzelemente 10 gegenüber den Filterplatten 2 flüssigkeitsdicht abgedichtet. Hierzu sind in einer ersten Ausgestaltung, die aus Fig. 6 hervorgeht, Dichtungen in Form von O-Ringen 24 vorgesehen. Die O-Ringe 24 sind so um die Durchbrechungen 6 der Filterplatten 2 herum angeordnet, dass sie den Kontaktbereich zwischen den Distanzelementen 10 und den Filterplatten 2 abdichten.

Wie aus Fig. 7 hervorgeht, kann die Abdichtung des Filtratabzugsrohrs 8 bzw. der Distanzelemente 10 gegenüber den Filterplatten 2 auch mittels einer Klebenaht 26 erfolgen. Die Klebenähte 26 verlaufen in den Zwischenräumen 5 zwischen benachbarten Filterplatten 2 umfänglich um die Distanzelemente 10, wobei die Zwischenräume 5 zwischen den Filterplatten 2 vollständig flüssigkeitsdicht verschlossen werden. In ähnlicher Weise werden die Verbindungselemente 16 gegenüber den daran angrenzenden Filterplatten mit Klebenähten 28 abgedichtet, die im Bereich der an den Verbindungselementen 16 ausgebildeten Ringnuten 18 gelegt werden. Die Klebenähte 26 und 28 dienen nicht nur zur Abdichtung der Filtratabzugsrohre 8 gegenüber den Filterplatten 2 sondern auch zur Verbindung der Filterplatten 2 mit den Filtratabzugsrohren 8, so dass die Filterplatten 2 und die Filtratabzugsrohre 8 eine Montageeinheit bilden, die in einfacher Weise in eine Filterpumpe eingesetzt werden kann.

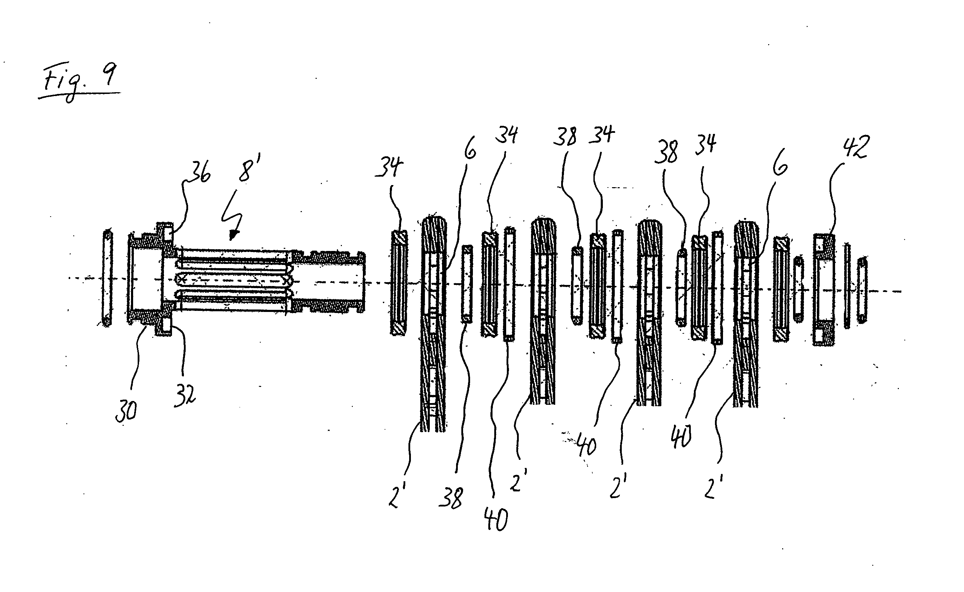

Aus den Fig. 8 und 9 geht ein weiterer Filterstapel gemäß der Erfindung hervor. Dieser Filterstapel weist vier in axialer Richtung voneinander beabstandete Filterplatten 2' auf. An den Filterplatten 2' sind Durchbrechungen 6 zur Aufnahme eines Filtratabzugsrohres 8' ausgebildet. Das Filtratabzugsrohr 8' ist einteilig ausgebildet. Ein Endbereich 30 des Filtratabzugsrohrs 8' ist absatzförmig radial erweitert. Der Endbereich 30 dient zum Anschluss des Filtratabzugsrohrs 8' an eine Filtratleitung der Filterpumpe oder zum Anschluss an ein Filtratabzugsrohr 8' eines weiteren Filterstapels. An dem Filtratabzugsrohr 8' sind eine Vielzahl von Längsschlitzen 29 ausgebildet, die ein Überströmen des Filtrats von den Filterplatten 2' in das Filtratabzugsrohr 8' ermöglichen.

Der Übergang zu dem erweiterten Endbereich 30 bildet eine Anlagefläche 32 für eine erste Filterplatte 2'. Diese Filterplatte 2' wird gegenüber der Anlagefläche 32 mittels einer Dichtung in Form eines X-Rings 34 abgedichtet. Der X-Ring 34 ist hierbei in einer an der Anlagefläche 32 ausgebildeten Ringnut 36 angeordnet.

An der von der Anlagefläche 32 abgewandten Seite der ersten Filtratplatte 2' liegt ein Ringelement 38 an, dessen Innendurchmesser im Wesentlichen dem Innendurchmesser der Durchbrechung 6 entspricht. An dem Außenumfang des Ringelements 38 stützt sich ein weiterer X-Ring 34 ab. Der X-Ring 34 wird von einem Ringelement 40 umgeben, der an dem Außenumfang des X-Rings 34 anliegt. Stirnseitig liegt an dem X-Ring 34 eine zweite Filtratplatte 2' an, wobei der X-Ring einen Zwischenraum 5' zwischen erster und zweiter Filterplatte 2' schafft und in diesem Zwischenraum die beiden Filterplatten 2' gegenüber dem Filtratabzugsrohr 8' abdichtet. An der von der ersten Filterplatte 2' beabstandeten Seite der zweiten Filterplatte 2' folgen zwei weitere Filterplatten 2' wobei zwischen benachbarten Filterplatten 2' in der bereits beschriebenen Weise ein Ringelement 38, ein X-Ring 34 und ein Ringelement 40 angeordnet sind.

An der von der dritten Filterplatte 2' abgewandten Seite der vierten Filterplatte 2' liegt ein Endring 42 des Filtratabzugsrohres 8' an. An der der vierten Filterplatte 2' zugewandten Seite des Endrings 42 ist eine Ringnut 44 ausgebildet, die einen X-Ring 34 aufnimmt, der die vierte Filterplatte 2' gegenüber dem Endring 42 abdichtet. Der Endring 42 ist gegenüber dem Filtratabzugsrohr 8' mittels eines O-Rings 46 abgedichtet, der in einer an dem Innenumfang des Endrings 42 ausgebildeten Ringnut 48 angeordnet ist.

Die von der vierten Filterplatte 2' abgewandte Außenseite des Endrings 42 schließt sich bündig an eine Innenseite einer an dem Filtratabzugsrohr 8' ausgebildeten Ringnut 50 an. In der Ringnut 50 ist ein Sicherungsring 52 angeordnet, der die Filterplatten 2' und das Filtratabzugsrohr 8' zusammenhält.

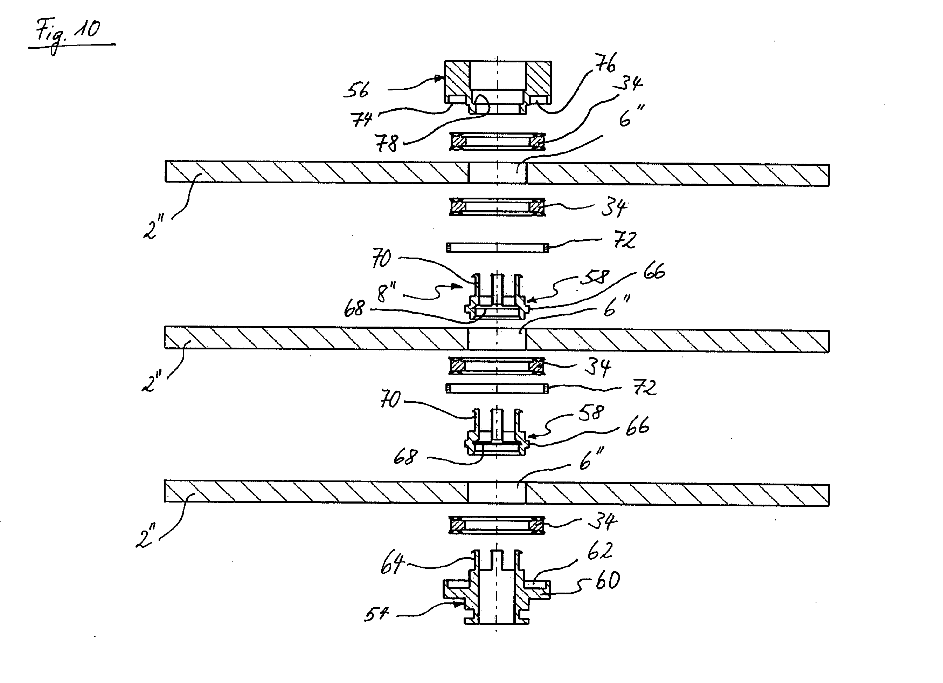

Der in Fig. 10 teilweise dargestellten Filterstapel weist drei Filterplatten 2" auf. Ein Filtratabzugsrohr 8" ist mehrteilig aus zwei äußeren Verbindungselementen 54 und 56 sowie zwei dazwischen liegenden Distanzelementen 58 ausgebildet.

Das Verbindungselement 54 ist im Wesentlichen rohrförmig ausgebildet. An seinem Außenumfang kragt eine Ringschulter 60, die eine Auflagefläche für eine erste Filterplatte 2" bildet, radial nach außen. An der Ringschulter 60 ist eine um deren gesamten Umfang verlaufende Ringnut 62 ausgebildet, die zur Aufnahme eines X-Rings 34 dient, mit dem das Verbindungselement 54 gegenüber der daran anliegenden Filterplatte 2" flüssigkeitsdicht abgedichtet wird. An einem axialen Ende des Verbindungselements 54, das durch eine an der Filterplatte 2" ausgebildete Durchbrechung 6" geführt ist, sind mehrere axial ausgerichtete Zungen 64 ausgebildet, deren äußere Enden hakenförmig radial nach außen weisen. Die Zungen 64 sind derart ausgebildet, dass sie in radialer Richtung in gewissem Maße flexibel nachgeben.

Die Distanzelemente 58 sind hülsenförmig gestaltet. An ihrem Außenumfang weisen sie eine radial nach außen kragende Ringschulter 66 auf. Die Ringschulter 66 dient als Anlagefläche bei Auflage des Distanzelements auf einer Filterplatte 2". Wie bei dem Verbindungselement 54 sind auch an einem axialen Ende der Distanzelemente 58, das von der von der Ringschulter 66 gebildeten Anlagefläche abgewandt ist, mehrere axial ausgerichtete und in radialer Richtung flexible Zungen 70 ausgebildet, deren äußere Enden hakenförmig radial nach außen weisen.

In dem Innenlumen der Distanzelemente 58 ist an deren Innenumfang eine Ringnut 68 ausgebildet. Im zusammengebauten Zustand des Filtratabzugsrohrs 8" greifen an dem von den Zungen 70 abgewandten Ende der Distanzelemente 58 ein benachbartes Verbindungselement 54 bzw. ein benachbartes Distanzelement 58 ein, wobei die Zungen 64 des Verbindungselements 54 bzw. die Zungen 70 des Distanzelements 58 in die Ringnut 68 des Distanzelements 58 einrasten, so dass das Verbindungselement 54 bzw. das Distanzelement 58 mit dem zweiten Distanzelement 58 in Form einer Rastverbindung verbunden sind.

Umfangsseitig ist um die Distanzelemente 58 herum jeweils ein X-Ring 34 angeordnet, der den Zwischenraum zwischen zwei axial benachbarten Filterplatten 2" flüssigkeitsdicht abdichtet. Hierbei liegen die X-Ringe 34 mit ihrem Innenumfang an der Ringschulter 66 der Distanzelemente 58 an und werden an ihrem Außenumfang jeweils von einem Ringelement 72 festgelegt, das um die X-Ringe 34 herum angeordnet ist. In axialer Richtung liegen die X-Ringe 34 an den Filterplatten 2" dichtend an.

Das Verbindungselement 56 verjüngt sich ausgehend von einem Teil, der außenseitig einer äußeren Filterplatte 2" angeordnet ist, absatzförmig. Der verjüngte Teil des Verbindungselements greift in die Durchbrechung 6" der äußeren Filterplatte 2" ein. Ein Absatz 74 des Verbindungselements 56 liegt dann an der Außenseite der äußeren Filterplatte 2" auf. Um das Verbindungselement 56 gegenüber der Filterplatte 2" flüssigkeitsdicht abzudichten, ist an dem Absatz 74 eine Ringnut 76 ausgebildet, in der ein X-Ring 34 angeordnet ist.

Auch in dem Innenlumen des Verbindungselements 56 ist ein Absatz 78 ausgebildet, an dem sich das Innenlumen ausgehend von dem in die Durchbrechung 6" der äußeren Filterplatte 2" eingreifenden Teil erweitert. Dieser Absatz 78 wird von den radial nach außen auskragenden Enden der Zungen 70 eines in das Verbindungselement 56 eingreifenden Distanzelements 58 umgriffen, wodurch das Distanzelement 58 und das Verbindungselement 56 mittels einer Rastverbindung miteinander verbunden sind.

Obwohl bei dem in den Fig. 8 und 9 dargestellten Filterstapel und dem in Fig. 10 dargestellten Filterstapel als Dichtungen lediglich X-Ringe 34 eingesetzt werden, sei darauf hingewiesen, dass anstatt der X-Ringe 34 auch geeignete andersartige Dichtringe, vorzugsweise Profildichtringe verwendet werden können.

### Bezugszeichenliste

- 2,2', 2" -: Filterplatte
- 4 -: Durchbrechung
- 5 -: Zwischenraum
- 6, 6" -: Durchbrechung
- 8, 8', 8" -: Filtratabzugsrohr
- 10 -: Distanzelement
- 12 -: Kragen
- 14 -: Höcker
- 16 -: Verbindungselement
- 18 -: Ringnut
- 20 -: Auflagefläche
- 22 -: Höcker
- 24 -: O-Ring
- 26 -: Klebenaht
- 28 -: Klebenaht
- 29 -: Längsschlitz
- 30 -: Endbereich
- 32 -: Anlagefläche
- 34 -: X-Ring
- 36 -: Ringnut
- 38 -: Ringelement
- 40 -: Ringelement
- 42 -: Endring
- 44 -: Ringnut
- 46 -: O-Ring
- 48 -: Ringnut
- 50 -: Ringnut
- 52 -: Sicherungsring
- 54 -: Verbindungselement
- 56 -: Verbindungselement
- 58 -: Distanzelement
- 60 -: Ringschulter
- 62 -: Ringnut
- 64 -: Zunge
- 66 -: Ringschulter
- 68 -: Ringnut
- 70 -: Zunge
- 72 -: Ringelement
- 74 -: Absatz
- 76 -: Ringnut
- 78 -: Absatz
- A -: Einzelheit
- X -: Längsachse

## Patentansprüche

1. Filterstapel für eine Filterpumpe mit mindestens zwei axial voneinander beabstandeten Filterplatten (2), die jeweils mindestens eine Durchbrechung (6) zur Aufnahme eines Filtratabzugsrohrs (8) aufweisen, **dadurch gekennzeichnet, dass** der Filterstapel als eine Montageeinheit ausgebildet ist, bei der die Filterplatten (2) und das Filtratabzugsrohr (8) fest miteinander verbunden sind.

2. Filterstapel nach Anspruch 1, **dadurch gekennzeichnet, dass** die Filterplatten (2) jeweils mindestens eine Durchbrechung (4) zur Aufnahme einer Umwälzvorrichtung aufweisen.

3. Filterstapel nach einem der vorangehenden Ansprüche, **dadurch gekennzeichnet, dass** die Filterplatten (2) und das Filtratabzugsrohr (8) miteinander verklebt sind.

4. Filterstapel nach einem der Ansprüche 1 oder 2, **dadurch gekennzeichnet, dass** die Filterplatten (2) und das Filtratabzugsrohr (8) miteinander durch Sintern verbunden sind.

5. Filterstapel nach einem der Ansprüche 1 oder 2, **dadurch gekennzeichnet, dass** der Filterstapel als ein einteiliges Bauteil ausgebildet ist.

6. Filterstapel nach einem der Ansprüche 1 oder 2, **dadurch gekennzeichnet, dass** das Filtratabzugsrohr (8) mehrteilig ausgebildet ist.

7. Filterstapel nach Anspruch 6, **dadurch gekennzeichnet, dass** benachbarte Filterplatten (2) mittels in die Durchbrechung (6) zur Aufnahme des Filtratabzugsrohrs (8) eingreifender Distanzelemente (10) beabstandet sind, wobei die Distanzelemente (10) das Filtratabzugrohr (8) bilden.

8. Filterstapel nach Anspruch 7, **dadurch gekennzeichnet, dass** sich axial benachbarte Distanzelemente (10) aufeinander abstützen.

9. Filterstapel nach einem der Ansprüche 7 oder 8, **dadurch gekennzeichnet, dass** sich benachbarte Distanzelemente (10) im Bereich der Durchbrechung (6) der Filterplatte (2) abstützen.

10. Filterstapel nach einem der Ansprüche 7 bis 9, **dadurch gekennzeichnet, dass** an einer Stirnseite der Distanzelemente (10) jeweils mindestens ein axial vorstehender Höcker (14) ausgebildet ist.

11. Filterstapel nach einem der Ansprüche 7 bis 10, **dadurch gekennzeichnet, dass** benachbarte Filterplatten (2) mittels einer um das Distanzelement (10) umlaufenden Klebenaht miteinander verbunden sind.

12. Filterstapel nach einem der Ansprüche 7 bis 11, **dadurch gekennzeichnet, dass** die Distanzelemente (10) Rastmittel aufweisen, mit denen benachbarte Distanzelemente (10) miteinander verbindbar sind.

13. Filterstapel nach einem der Ansprüche 7 bis 12, **dadurch gekennzeichnet, dass** Dichtringe vorgesehen sind, welche jeweils ein Distanzelement (10) umgeben und mit jeweils zwei benachbarten Filterplatten (2) in dichtender Anlage sind.

14. Filterstapel nach einem der vorangehenden Ansprüche, **dadurch gekennzeichnet, dass** in die Durchbrechung (6) zumindest einer eine Stirnseite des Filterstapels bildenden Filterplatte (2) ein Verbindungselement eingreift, welches zur Bildung einer Verbindung zu einer Filtratleitung der Filterpumpe oder zu einem weiteren Filterstapel ausgebildet ist.

15. Filterstapel nach einem der vorangehenden Ansprüche, **dadurch gekennzeichnet, dass** zwischen den Filterplatten (2) zumindest ein Auflageelement angeordnet ist.

16. Filterstapel nach einem der vorangehenden Ansprüche, **dadurch gekennzeichnet, dass** die Filterplatten (2) einen porösen Kern aufweisen, der von einer Membran umgeben ist.

17. Filterstapel nach einem der vorangehenden Ansprüche, **dadurch gekennzeichnet, dass** die Filterplatten (2) Sinterteile sind.

18. Filterstapel nach einem der Ansprüche 12 bis 17, **dadurch gekennzeichnet, dass** zumindest ein Sicherungsring (52) vorgesehen ist, welcher die Filterplatten (2) auf dem Filtratabzugsrohr (8) festlegt.
